Europäisches Patentamt

**European Patent Office**

Office européen des brevets

(11) Numéro de publication: **0 239 430**
**B1**

# (12) FASCICULE DE BREVET EUROPEEN

(45) Date de publication du fascicule du brevet:
02.05.90

(21) Numéro de dépôt: **87400330.4**

(22) Date de dépôt: **16.02.87**

(51) Int. Cl.⁴: **B32B 17/10**, B65G 49/06
// C03C27/12

---

(54) Procédé et dispositif pour l'assemblage automatique de vitrages feuilletés.

---

(30) Priorité: **27.02.86 FR 8602711**

(43) Date de publication de la demande:
**30.09.87 Bulletin 87/40**

(45) Mention de la délivrance du brevet:
**02.05.90 Bulletin 90/18**

(84) Etats contractants désignés:
**BE DE FR GB IT SE**

(56) Documents cités:
**EP-A- 0 071 109**
**EP-A- 0 210 923**

(73) Titulaire: **SAINT-GOBAIN VITRAGE INTERNATIONAL,
18, avenue d'Alsace, F-92400 Courbevoie(FR)**

(72) Inventeur: **Guglielmetti, Giorgio, Corso Italia 42,
I-Mondovi (Cuneo)(IT)**
Inventeur: **Carossio, Guido, Via Filadelfia 132, I-Turin(IT)**
Inventeur: **Gilli, Luigi, Via Carducci 4, I-Luserna
S.Giovanni (Turin)(IT)**

(74) Mandataire: **Muller, René et al, SAINT-GOBAIN
RECHERCHE 39, qual Lucien Lefranc,
F-93304 Aubervilliers(FR)**

ACTORUM AG

## Description

La présente invention concerne la fabrication de structures stratifiées telles des vitrages feuilletés et en particulier la fabrication des vitrages feuilletés bombés.

Les vitrages feuilletés utilisés dans les véhicules de transport, notamment en tant que pare-brise, sont formés généralement d'au moins une feuille rigide telle une feuille de verre ou une feuille de matière plastique comme le polycarbonate ou le polyméthacrylate de méthyle, et d'au moins une feuille en matière plastique plus souple, en polyvinylbutyral ou en polyuréthane par exemple, utilisée généralement comme feuille intercalaire dans le cas d'une structure comprenant deux feuilles rigides.

Pour fabriquer ces vitrages feuilletés, on découpe la ou les feuilles de matière plastique souple au préalable au format exact du vitrage ou à un format géométrique légèrement plus grand que l'on désigne par primitif, on les empile avec les autres éléments constitutifs du vitrage feuilleté et on assemble tous ces éléments à l'aide d'une opération d'assemblage proprement dite généralement effectuée en deux étapes : une première étape consistant, par exemle, en une opération de calandrage fournissant un assemblage préliminaire, suivie d'une seconde étape consistant en un cycle d'autoclave mettant en oeuvre la température et la pression fournissant l'assemblage définitif.

L'invention concerne plus particulièrement l'empilage des éléments constitutifs d'un vitrage feuilleté comprenant deux feuilles rigides et une feuille intercalaire souple et surtout le centrage des feuilles rigides telles des feuilles de verre dans la position correcte pour l'empilage.

L'un des problèmes rencontrés dans la fabrication des vitrages feuilletés est le positionnement correcte dans l'empilage de chacun des éléments constitutifs dudit empilage et notamment des feuilles rigides telles les feuilles de verre. En effet, l'empilage des différents éléments doit s'effectuer au millimètre près et ce n'est pas aisé d'obtenir une telle précision sur une ligne de fabrication de vitrages feuilletés à forte cadence.

Des lignes d'assemblages automatiques d'éléments de vitrages feuilletés ont déjà été décrites comme par exemple dans la publication de brevet européen 0 071 109. Mais ces lignes connues ne sont pas entièrement satisfaisantes notamment en ce qui concerne l'empilage.

L'invention propose un procédé et un dispositif automatique pour l'empilage d'éléments de vitrage feuilleté comprenant deux feuilles rigides bombées telles des feuilles de verre et une feuille intercalaire souple telle une feuille en polyvinylbutyral ou en polyuréthane.

Le procédé selon l'invention consiste à centrer séparément les deux feuilles rigides dans des positions horizontales décalées de niveau et longitudinalement, le centrage étant effectué par rapport à un même plan vertical de symétrie pris comme plan de référence, la feuille inférieure étant centrée directement dans la position de l'empilage puis après que la feuille intercalaire ait été déposée sur la feuille inférieure, de venir déposer la feuille supérieure dans la position de l'empilage en lui faisant subir une translation horizontale et une translation verticale de longueurs déterminées, correspondant à la distance séparant les deux positions de centrage.

Selon une caractéristique du procédé, le plan de symétrie de référence pour le centrage des deux feuilles rigides est le plan de symétrie du convoyeur amenant les feuilles rigides au dispositif automatique d'assemblage.

Le centrage selon l'invention est avantageusement réalisé alors que les deux feuilles rigides sont disposées avec leur concavité principale, c'est-à-dire la plus marquante, orientée vers le bas.

Bien que l'invention s'applique à d'autres feuilles rigides et d'autres feuilles intercalaires, la suite de la description sera relative à l'assemblage automatique de deux feuilles de verre bombées et d'une feuille intercalaire en polyvinylbutyral.

Il est déjà connu du document EP-A 0 071 109 un dispositif automatique comprenant des moyens de centrage de la feuille inférieure dans une position horizontale, ces moyens étant disposés au poste d'empilage, des moyens de préhension et de centrage de la feuille supérieure en position horizontale, différents des moyens précédents, des moyens pour la dépose dans l'empilage de la feuille intercalaire, des moyens pour la mise en place de la feuille supérieure dans l'empilage, un convoyeur amenant les feuilles de verre pour l'assemblage. Ledit dispositif connu se caractérise selon l'invention en ce qu'il comprend un cerveau électronique de commande et en ce que les moyens de centrage de la feuille supérieure ainsi que les moyens de centrage de la feuille inférieure comprennent dans chaque cas un balancier disposé transversalement par rapport au convoyeur, susceptible de se mouvoir dans les trois dimensions et articulé autour d'un axe horizontal parallèle au plan axial du convoyeur et également mobile autour d'un axe vertical, ainsi que des doigts avant et des doigts arrière, les balanciers étant montés sur des moyens mobiles animés par des vis et des moteurs à commande numérique permettant de modifier leur position par rapport aux doigts avant et arrière, les doigts arrière étant montés sur des moyens mobiles permettant de modifier leur position par rapport aux doigts avant.

D'autres avantages et caractéristiques de l'invention apparaitront dans un exemple de réalisation du dispositif décrit en relation avec les figures.

La figure 1 représente l'ensemble du dispositif de centrage et d'empilage des éléments du vitrage feuilleté.

La figure 2 est une vue dans l'axe du convoyeur plus détaillée du dispositif représenté sur la figure 1.

La figure 3 est une vue de côté du dispositif représenté sur la figure 2.

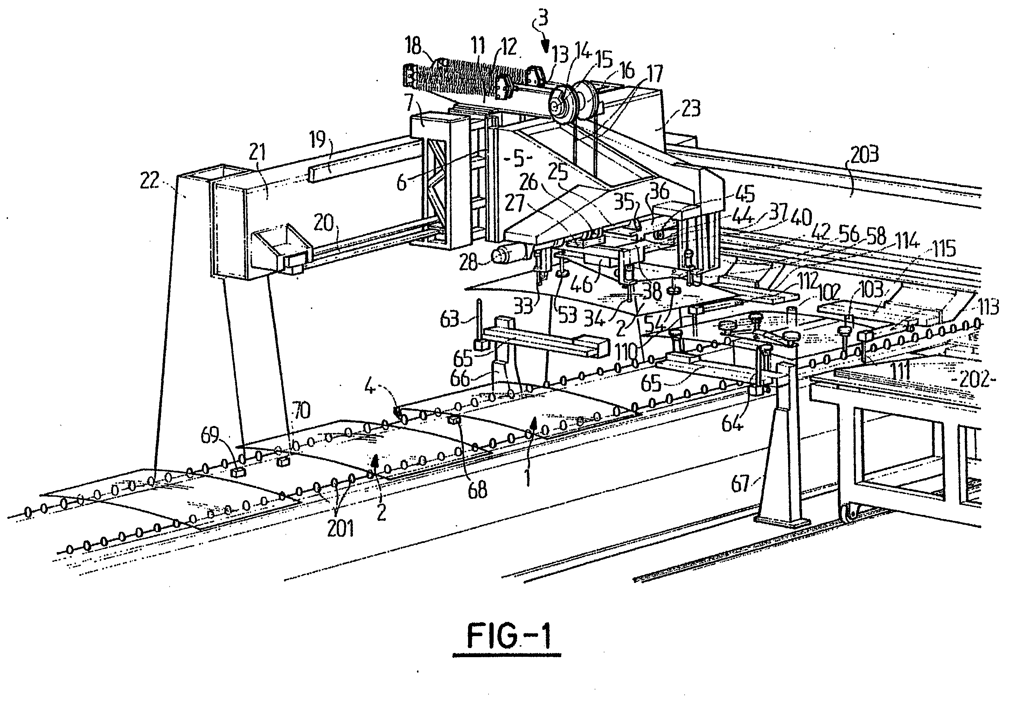

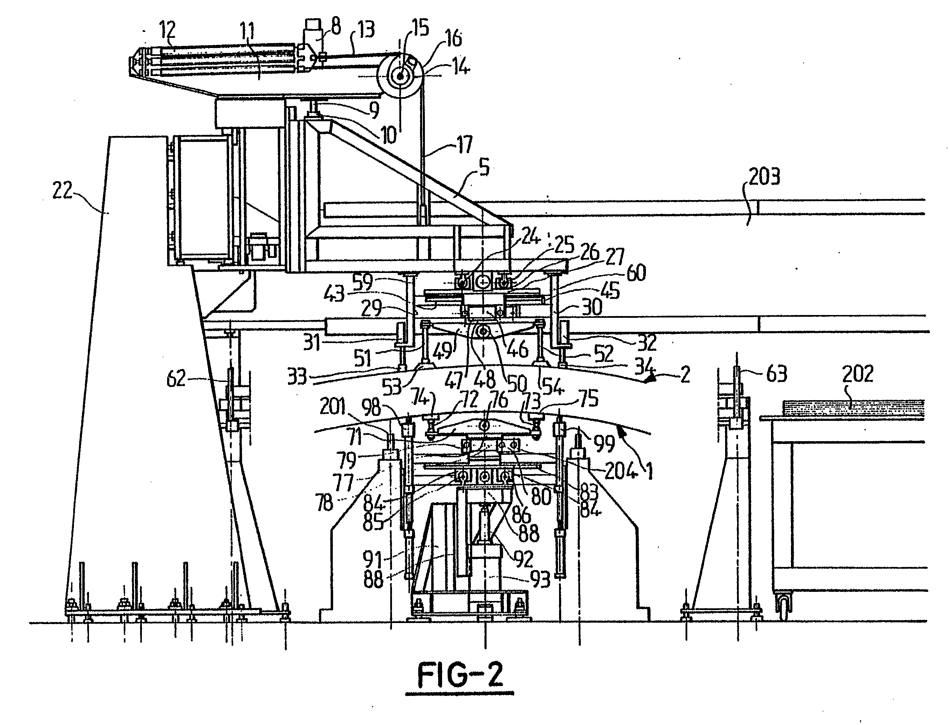

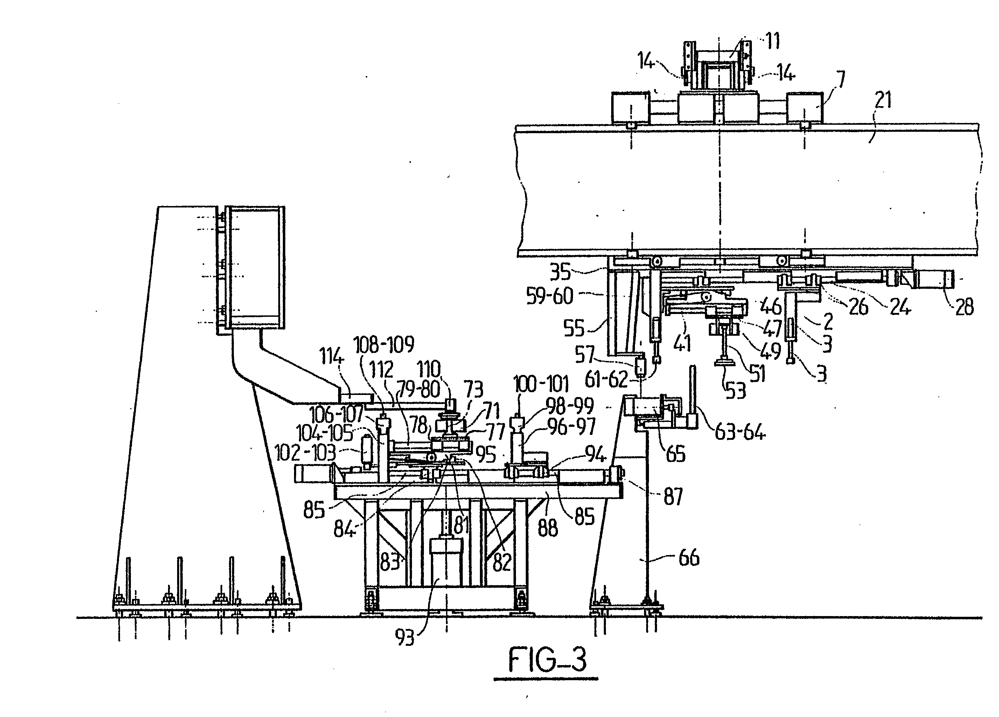

Sur la figure 1 est représenté l'ensemble du dispositif de centrage des deux feuilles de verre 1, 2 et d'empilage de la structure feuilletée. Les moyens de préhension et de centrage 3 de la feuille supérieure sont disposés au dessus du convoyeur 4 amenant les feuilles de verre et en amont de la position d'empilage. Le convoyeur 4 est formé essentiellement de deux bandes parallèles porteuses d'ergots 201, supportant les feuilles de verre. Ces moyens de centrage 3 sont montés sur un portique 5 pouvant coulisser sur deux glissières verticales 6 portées par un chariot 7. Ce montage procure une possibilité d'un mouvement de montée-baisse aux moyens de centrage. Ce mouvement est commandé par un moteur à commande numérique 8 entrainant la rotation d'une vis verticale 9 à travers un écrou solidaire 10 du portique comme représenté sur les figures 2 et 3. Le moteur est monté sur une double potence 11 portée par le chariot 7. Le poids de la partie mobile verticalement du dispositif de préhension et de centrage de la feuille supérieure est compensé par l'action de plusieurs ressorts horizontaux 12 dont les extrémités mobiles sont fixées à deux cables 13 s'enroulant autour de deux poulies excentriques 14 portées par un même arbre horizontal 15 monté au bout de la double potence transversale 11.

Ces poulies excentriques 14 qui compensent la variation de la force des ressorts 12 liée à leur élongation sont solidaires en rotation de deux autres poulies 16 tournant autour du même arbre. Sur ces poulies s'enroulent deux chaînes verticales 17 dont les extrémités sont fixées à une traverse du portique.

Les extrémités opposées des ressorts de compensation sont fixées à une plaque verticale 18 montée à l'extrémité arrière de la double potence. Ce montage permet de compenser le poids du dispositif de préhension en tous points de sa trajectoire de montée-baisse.

Le chariot peut se déplacer sur deux rails horizontaux 19, 20, portés par une poutre horizontale 21 disposée parallèlement au convoyeur 4 de la ligne d'assemblage où est réalisé l'empilage des éléments constitutifs du vitrage feuilleté. Le chariot 7 effectue le transfert de la feuille de verre supérieure 2 du point où elle est saisie sur le convoyeur au poste d'empilage. La poutre horizontale 21 est supportée par deux piliers 22, 23.

Deux arbres horizontaux 24, 25 solidaires du portique sont disposés sous celui-ci, parallèlement à l'axe du convoyeur. Sur ces deux arbres coulissent quatre premiers paliers 26 montés sur une plaque horizontale 27.

Le coulissement des paliers le long des arbres 24, 25 est provoqué par un moteur linéaire 28 fixé sur la face inférieure du portique et qui entraine une vis (non représentée) parallèle aux arbres 24, 25, en rotation à travers un écrou (non représenté) solidaire de la plaque 27, situé entre les paliers 26. Cette plaque horizontale 27 soutient deux bras symétriques, 29 , 30, disposés transversalement par rapport à l'axe du convoyeur. A l'extrémité de chacun de ces deux bras 29, 30 est monté un vérin vertical 31, 32 dont le bout de la tige constitue un doigt 33, 34 pour la mise en position de la feuille de verre dans un plan horizontal pour son centrage ultérieur, comme décrit par la suite. Le coulissement des paliers 26 le long des deux arbres 24, 25 permet de modifier l'écartement des doigts 33, 34 par rapport à deux autres doigts dont la position en aval est constante par rapport au portique 5 comme décrits ci-après.

Deux autres paliers 35, disposés en aval des quatre premiers paliers 26, sont également montés coulissant sur les deux arbres horizontaux 24, 25. La base des deux paliers 35 est fixée sur une plaque 36. Sur la face inférieure de cette plaque sont disposées à ses deux extrémités, deux glissières 37 transversales par rapport à l'axe du convoyeur. Sur ces glissières coulisse un coulisseau 38 porteur de deux plaques verticales 39, 40 reliées entre-elles par deux arbres horizontaux 41, 42 disposés parallèlement à l'axe du convoyeur.

L'axe du coulisseau 38 est muni d'un écrou dans lequel est vissée une vis 43 dont la rotation procure au coulisseau le mouvement de translation le long des glissières 37. La vis 43 est entrainée en rotation par un moteur linéaire non représenté et ce par l'intermédiaire d'une courroie 44 crantée qui engraine un pignon 45 monté au bout de la vis 43. Sur les deux arbres 41, 42 coulisse une tourelle 46 munie d'un plateau tournant 47 disposé sous sa face inférieure . Sur l'axe vertical 48 du plateau 47 est monté, transversalement par rapport à l'axe du convoyeur, un balancier 49 qui peut d'autre part pivoter autour d'un axe horizontal 50 parallèle à l'axe du convoyeur.

A chaque extrémité du balancier 49 est fixée une tige verticale 51, 52 au bout de laquelle est montée une ventouse 53, 54 servant à la préhension des feuilles de verre 2.

Deux bras 55, 56 montés sur la partie aval du portique portent à leur extrémité des tiges 57, 58 faisant office de butée dans le sens longitudinal pour le centrage de la feuille de verre supérieure 1. Deux autres bras 59, 60 montés juste en amont portent à leur extrémité un vérin vertical dont la tige constitue un doigt 61, 62 pour la mise en position de la feuille de verre dans un plan horizontal. Ces deux doigts ainsi que les deux doigts 33, 34 décrits précédemment et montés plus en amont, sont actionnés simultanément comme décrit par la suite.

De part et d'autre du convoyeur 4 sont prévus deux centreurs 63, 64, utilisés pour le centrage latéral de la feuille de verre supérieure dans l'axe du convoyeur, ces centreurs sont constitués essentiellement d'une tige verticale.

Ces centreurs sont montés sur deux parties d'un rail horizontal 65 disposé transversalement par rapport au convoyeur, porté par des piliers 66, 67 à un niveau suffisamment haut pour ne pas gêner le passage inférieur des feuilles de verre 1 sur le convoyeur. Les centreurs sont animés par un moteur électrique commandé par le cerveau électronique de la ligne d'assemblage.

En amont des moyens de centrage de la feuille supérieure, sous le passage des feuilles de verre amenées par le convoyeur 4, une cellule photoélectrique 68 détecte le passage de la feuille de verre à saisir pour l'opération de centrage. Deux autres cellules 69, 70 disposées plus en amont déterminent la vitesse de la feuille de verre à saisir. La détermination de la vitesse et la détection de la feuille de verre permettent la préhension en marche de la feuille de verre par le dispositif de préhension et de centrage de la feuille supérieure, qui est à cette fin entraîné à une vitesse égale à celle du convoyeur.

Le dispositif de préhension et de centrage de la feuille supérieure décrit ci-dessus permet grâce aux différents mouvements du balancier 49 porteur des ventouses de préhension, une mise en position correcte de la feuille de verre supérieure. Cette position correcte est selon l'invention une position intermédiaire décalée par rapport à la position d'empilage d'une translation horizontale et d'une translation verticale déterminées au préalable. Cette position intermédiaire est selon l'invention centrée sur l'axe du convoyeur. Le centrage consiste également en une mise en position horizontale de la feuille supérieure.

Les moyens de centrage de la feuille inférieure 1 sont disposés au poste d'empilage. Ces moyens sont essentiellement semblables aux moyens de centrage de la feuille supérieure. Ces moyens comprennent un balancier 71 disposé transversalement par rapport au convoyeur 4. Aux deux extrémités de ce balancier sont fixées deux tiges verticales 72, 73. Au bout supérieur de ces deux tiges sont montées deux ventouses 74, 75 servant à la préhension de la feuille de verre inférieure. Le balancier 71 peut pivoter autour d'un axe horizontal 76, parallèle à l'axe du convoyeur. Le balancier est en outre monté sur un plateau tournant 77 autour d'un axe vertical.

Le plateau 77 est monté sur une tourelle 78 coulissant le long de deux arbres horizontaux 79, 80 disposés parallèlement à l'axe du convoyeur. Ces deux arbres sont supportés par un coulisseau 81 qui coulisse sur deux glissières 82 disposées transversalement par rapport à l'axe du convoyeur.

De même que décrit précédemment dans le cas du dispositif de centrage de la feuille supérieure, mais non représentés sur les figures, l'axe du coulisseau est muni d'un écrou dans lequel se visse une vis dont la rotation provoque le déplacement du coulisseau le long des glissières 82. La vis est entraînée en rotation par un moteur linéaire, et ce par l'intermédiaire d'une courroie crantée qui engraine un pignon monté au bout de la vis.

Les deux glissières 82 sont fixées à une plaque horizontale 83 qui est solidaire de deux paliers inversés 84, montés coulissants sur deux arbres horizontaux 85, 86 parallèles au convoyeur qui sont montés par l'intermédiaire de paliers 87 sur un plateau 88. Ce plateau 88 est monté coulissant sur deux glissières verticales 89, 90 solidaires d'un bâti 91. Sous le plateau 88 est fixée la tige 92 d'un vérin vertical 93 procurant un mouvement de montée-baisse au plateau 88 et par là au dispositif de préhension et de centrage de la feuille de verre.

Quatre autres paliers 94 sont également montés sur les deux arbres, 85, 86 en amont des deux autres paliers 84. Ils portent une plaque horizontale 95 qui soutient deux bras symétriques 96, 97, transversaux par rapport à l'axe du convoyeur. A l'extrémité de chacun de ces bras est monté un vérin vertical 98, 99 dont la tige constitue un doigt 100, 101 pour la mise en position de la feuille de verre dans un plan horizontal.

En aval balancier 71 et des ventouses 74, 75, le dispositif comprend deux tiges verticales escamotables 102, 103 faisant office de butée dans le sens longitudinal pour le centrage de la feuille inférieure 1.

Deux autres bras 104, 105, disposés juste en amont portent à leur extrémité un vérin vertical 106, 107 dont la tige constitue un doigt 108, 109 pour la mise en position de la feuille de verre inférieure dans un plan horizontal.

Le dispositif comporte encore deux centreurs latéraux 110, 111 utilisés pour le centrage latéral de la feuille de verre inférieure, dans l'axe du convoyeur. Ces centreurs constitués essentiellement d'une tige verticale, sont montés au bout d'un bras 112, 113 qui peut se déplacer le long de deux rails 114, 115, disposés au dessus du passage des feuilles de verre, portés par une poutre 203 placée transversalement par rapport au convoyeur 4.

Le dispositif commandé et contrôlé par un cerveau électronique fonctionne de la façon suivante.

La première feuille de verre 1 qui est amenée par le convoyeur 4 est la feuille inférieure de l'empilage à constituer. La feuille est disposée sur le convoyeur avec sa concavité principale orientée vers le bas. Le détecteur 68 placé sous le convoyeur repère son passage et provoque la mise en action du dispositif inférieur de préhension et de centrage. Le plateau 88 est soulevé le long des glissières 89, 90 par l'action du vérin 93, et les ventouses 74, 75 viennent saisir la feuille de verre 1. La partie mobile supérieure du dispositif se déplace le long des arbres horizontaux 85, 86 pour mettre la feuille de verre 1 en butée contre les deux tiges avant 102, 103. Le balancier peut à ce moment pivoter légèrement autour de son axe vertical par l'intermédiaire du plateau tournant 27. Les quatre vérins porteurs des doigts 100, 101, 108, 109 sont alors actionnés pour la mise en position horizontale de la feuille de verre. Le balancier peut à ce moment pivoter légèrement autour se son axe horizontal 76. Les deux centreurs latéraux 110, 111 sont ensuite mis en action. Ces centreurs mesurent, à partir d'une position donnée, la distance parcourue par eux-mêmes pour arriver au contact des bords de la feuille 1. Un message est alors envoyé au cerveau électronique qui commande le mouvement du coulisseau 81 le long des glissières 82 par l'action de la vis. Le centrage étant réalisé par rapport au plan axial du convoyeur, le coulisseau 81 déplace la feuille de verre 1 pour l'amener dans ce plan axial. Le balancier peut à ce moment pivoter légèrement autour de son axe horizontal 76.

Pendant ce temps, la feuille suivante 2 constituant l'élément supérieur de l'assemblage, amenée par le convoyeur, sa concavité principale également orientée vers le bas est saisie en marche par le dispositif de préhension et de centrage supérieur. La détection de la vitesse de la feuille à saisir est effectuée par les deux cellules successives 69, 70, et l'information est envoyée au cerveau électronique qui va commander le mouvement d'avance du dispositif de préhension.

La cellule 68 disposée plus en aval détecte le passage de la feuille.

La saisie de la feuille 2 effectuée par l'abaissement du dispositif de préhension qui coulisse le long des glissières 6 portées par le chariot 5. Les ventouses 53, 54 arrivent au contact de la feuille de verre qui est alors saisie en marche et soulevée. Le moteur linéaire 28 entrainant la vis en rotation (non représentée) est mis en action et par un coulissement horizontal des paliers 26 le long des arbres 24, 25 la feuille 2 est amenée en butée contre les deux tiges 57, 58 pour le centrage longitudinal. Le balancier 49 peut à ce moment pivoter légèrement autour de son axe vertical par l'intermédiaire du plateau tournant 47. Les quatre vérins porteurs des quatres doigts 33, 34, 61, 62 sont alors actionnés pour la mise en position horizontale de la feuille de verre. Le balancier peut à ce moment pivoter autour de son axe horizontal 50. Les deux centreurs latéraux 63, 64 sont ensuite mis en action. De même que pour la feuille de verre inférieure, ces centreurs latéraux mesurent à partir d'une position donnée la distance parcourue par eux-mêmes le long du rail transversal 65 pour arriver au contact des bords de la feuille. A ce contact, un message est envoyé au cerveau électronique qui commande le déplacement transversal du coulisseau 38 le long des glissières 37 par action de la vis 43 pour amener la feuille de verre dans une position symétrique par rapport au plan axial du convoyeur pris comme référence. Le balancier peut à ce moment pivoter autour de son axe horizontal 50.

Pendant que les deux feuilles de verre sont réglées en position correcte en des emplacement séparés pour l'empilage, un dispositif annexe non représenté de préhension et de transfert de la feuille intercalaire 202 saisi cette feuille en attente à un poste environnant et assure son transfert jusqu'au poste d'empilage par un déplacement le long de la poutre 203.

La dépose de la feuille intercalaire 202 est effectuée sur la feuille de verre inférieure préalablement centrée comme décrit précédemment.

Après évacuation de ce dispositif annexe, la feuille de verre supérieure 2 préalablement centrée par rapport au plan axial du convoyeur comme décrit précédement est amenée sur l'empilage par une translation du chariot 7 et une descente du portique 5.

Un des avantages du dispositif selon l'invention est qu'il permet la fabrication simultanée de plusieurs types de vitrages feuilletés grâce aux multiples possibilités de déplacement des centreurs et des balanciers.

Ainsi l'écartement des deux doigts 33, 34 disposés en amont (doigts avant) par rapport aux deux doigts 61, 62 disposés en aval (doigts arrière) peut être modifié par action du moteur 28 par un coulissement, le long des arbres 24, 25 des quatre paliers 26 portés par la plaque 27 pour ce qui est du dispositif de centrage supérieur. L'écartement du balancier 49 porteur des ventouses pour la préhension de la feuille de verre, par rapport aux deux couples de doigts peut être modifié par action d'un moteur non représenté par un coulissement de la tourelle 46 le long des deux arbres longitudinaux 41, 42. On peut ainsi toujours disposer le balancier au milieu des doigts avant et arrière.

De même l'écartement des deux doigts 100, 101 disposés en amont (doigts avant) par rapport aux deux doigts 108, 109 disposés en aval (doigts arrière) peut être modifié par action du moteur 85 par un coulissement le long des arbres 85, 86 des quatre paliers 88 porteur de la plaque 87 dans le cas du dispositif de centrage inférieur. L'écartement du balancier 71 peut quant à lui être modifié par coulissement de la tourelle 78 le long des deux arbres 79, 80, ce mouvement étant provoqué par la mise en action d'une vis 204 disposée parallèlement aux arbres 79, 80, commandée par un moteur linéaire non représenté.

**Revendications**

1. Procédé pour le centrage et l'empilage d'éléments de vitrages feuilletés lors de l'assemblage automatique desdits vitrages feuilletés comprenant deux feuilles rigides bombées notamment en verre et une feuille intercalaire souple notamment en polyvinylbutyral ou en polyuréthane caractérisé en ce qu'on centre séparément les deux feuilles rigides et dans des positions horizontales décalées de niveau et longitudinalement, le centrage étant effectué par rapport à un même plan vertical de symétrie pris comme plan de référence, la feuille inférieure étant centrée directement dans la position d'empilage, puis après dépose de la feuille intercalaire sur la feuille inférieure, on amène la feuille supérieure dans la position d'empilage par une translation horizontale et une translation verticale de longueurs déterminées correspondant à la distance séparant les deux positions de centrage.

2. Procédé selon la revendication 1, caractérisé en ce que le plan de référence pour le centrage des deux feuilles rigides est le plan de symétrie du convoyeur amenant les feuilles rigides pour l'assemblage.

3. Procédé selon une des revendications 1 ou 2, caractérisé en ce que les deux feuilles rigides sont centrées alors que leur concavité principale est orientée vers le bas.

4. Dispositif automatique pour le centrage et l'empilage des deux feuilles rigides (1, 2) entrant dans la constitution d'un vitrage feuilleté lors de l'assemblage, comprenant un convoyeur (4) amenant les feuilles rigides pour l'assemblage, des moyens de préhension et de centrage (3) en position horizontale pour la feuille supérieure (2) ainsi que des moyens pour sa dépose dans l'empilage, des moyens de centrage de la feuille inférieure (1) en position horizontale, ces moyens étant différents des moyens précédents, des moyens annexes pour la dépose dans l'empilage de la feuille intercalaire, caractérisé en ce qu'il comprend un cerveau électronique de commande et en ce que les moyens de centrage de la feuille supérieure ainsi que les moyens de centrage de la feuille inférieure comprennent dans chaque cas un balancier (49, 71) disposé transversalement par rapport au convoyeur, susceptible de se mouvoir dans les trois dimensions et articulé autour d'un axe horizontal parallèle au plan axial du convoyeur et également mobile autour d'un axe vertical, ainsi que des doigts avant (33, 34, 100, 101) et des doigts arrière (61, 62, 108, 109), les balanciers étant montés sur des moyens mobiles animés par des vis et des moteurs à commande numérique permettant de modifier leur position par rapport aux doigts avant et arrière, les doigts arrière étant montés sur des moyens mobiles permettant de modifier leur position par rapport aux doigts avant.

## Patentansprüche

1. Verfahren zum Zentrieren und zur Stapelung von Elementen für Verbundglasscheiben bei der automatischen Montage dieser Verbundglasscheiben, die jeweils zwei gewölbte, biegefeste Lagen insbesondere aus Glas und eine biegsame Zwischenschicht insbesondere aus Polyvinylbutyral oder aus Polyurethan umfassen, dadurch gekennzeichnet, daß die beiden biegefesten Lagen sowohl in höhenversetzten horizontalen Positionen als auch in Längsrichtung getrennt zentriert werden, das Zentrieren in bezug auf ein und dieselbe vertikale Symmetrieebene als Bezugsebene erfolgt, die untere Lage direkt in der Stapellage zentriert wird und daß nach dem Aufbringen der Zwischenschicht auf der unteren Lage die obere Lage mittels einer horizontalen Translationsbewegung und einer vertikalen Translationsbewegung von jeweils vorgegebener Länge, die dem Abstand zwischen den beiden Zentrierpositionen entsprechen, in die Stapellage gebracht wird.

2. Verfahren nach Anspruch 1, dadurch gekennzeichnet, daß die Bezugsebene für die Zentrierung der beiden biegefesten Lagen die Symmetrieebene der Fördereinrichtung ist, die die biegefesten Lagen für die Montage zuführt.

3. Verfahren nach Anspruch 1 oder 2, dadurch gekennzeichnet, daß die beiden biegefesten Lagen derart zentriert werden, daß ihre Hauptkonkavität nach unten weist.

4. Automatische Vorrichtung zum Zentrieren und zur Stapelung von zwei biegefesten Lagen (1, 2), die zu einer Verbundglasscheibe montiert werden, mit einer Fördereinrichtung (4), die die biegefesten Lagen für die Montage zuführt, Einrichtungen (3) zum Greifen und Zentrieren der oberen Lage (2) in horizontaler Position und Einrichtungen zum Ablegen der oberen Lage in Stapellage, Einrichtungen zum Zentrieren der unteren Lage (1) in horizontaler Position, wobei diese Einrichtungen andere als die vorhergehenden Einrichtungen sind, und mit zusätzlichen Einrichtungen zum Ablegen der Zwischenschicht in Stapellage, dadurch gekennzeichnet, daß sie ein elektronisches Steuergehirn umfaßt und daß die Zentriereinrichtungen für die obere Lage ebenso wie die Zentriereinrichtungen für die untere Lage jeweils einen Hebel (49, 71) aufweisen, der quer zur Fördereinrichtung angeordnet und in den drei Dimensionen bewegbar ist und um eine horizontale, zur Axialebene der Fördereinrichtung parallele Achse schwenkbar gelagert sowie auch um eine Vertikalachse beweglich ist, ferner vordere Finger (33, 34, 100, 101) und hintere Finger (61, 62, 108, 109), wobei die Hebel auf beweglichen Einrichtungen angeordnet sind, die von Schnecken und Motoren mit numerischer Steuerung angetrieben werden, die es gestatten, ihre Position in bezug auf die vorderen und hinteren Finger zu verändern, und die hinteren Finger auf beweglichen Einrichtungen befestigt sind, die es erlauben, ihre Position in bezug auf die vorderen Finger zu verändern.

## Claims

1. Process for centring and stacking laminated glass window elements during the automatic assembly of such elements incorporating two convex rigid sheets, particularly of glass, and a flexible inercollated sheet, particularly of polyvinyl butyral or polyurethane, characterized in that separate centring takes place of the two rigid sheets and in horizontal positions which are displaced as regards level and longitudinally, centring being performed relative to the same vertical plane of symmetry taken as the reference plane, the lower sheet being directly centred in the stacking position and following the deposition of the intercollated sheet on the lower sheet, the upper sheet is brought into the stacking position by a horizontal translation and a vertical translation by predetermined lengths corresponding to the distance separating the two centring positions.

2. Process according to claim 1, characterized in that the reference plane for the centring of the two rigid sheets is the plane of symmetry of the conveyor supplying the rigid sheets for assembly.

3. Process according to one of the claims 1 or 2, characterized in that the two rigid sheets are centred, whereas their main concavity is oriented downwards.

4. Automatic apparatus for the centring and stacking of two rigid sheets (1, 2) used in the formation of a laminated glass window during assembly, incorporating a conveyor supplying the rigid sheets for the assembly, gripping and centring means (3) in the horizontal position for the upper sheet (2), as well as means for its deposition in the stack, centring means for the lower sheet (1) in the horizontal position, said means differing from the preceding means, ancillary means for depositing the intercollated sheet in the stack, characterized in that it comprises an electronic control brain and that the centring means for the upper sheet and the centring means for the lower sheet in each case have a balance bar (49, 71) positioned transversely with respect to the conveyor and able to move in three dimensions and articulated about a horizontal axis parallel to the axial plane of the conveyor and also mobile about a vertical axis, as well as front fingers (33, 34, 100, 101) and rear fingers (61, 62, 108, 109), the balance bars being mounted on mobile means operated by screws and digitally controlled motors making it possible to modify their position with respect to the front and rear fingers, the rear fingers being mounted on the mobile means making it possible to modify their position with respect to the front fingers.

FIG-1

FIG-2

FIG-3

EP 0 239 430 B1